# EUROPÄISCHE PATENTSCHRIFT

(11) **EP 1 616 721 B1**
(45) Veröffentlichungstag und Bekanntmachung des Hinweises auf die Patenterteilung: **15.02.2012**
(21) Anmeldenummer: 05104435.2
(22) Anmeldetag: 25.05.2005
(51) Int. Cl.: B60C 11/12

(54) **Fahrzeugluftreifen**
Pneumatic tire
Pneumatique

(30) Priorität: 15.07.2004 DE 102004034116
(43) Veröffentlichungstag der Anmeldung: 18.01.2006
(73) Patentinhaber: Continental Reifen Deutschland GmbH, 30165 Hannover (DE)
(72) Erfinder: Rodewald, Helmut, 31249, Rötzum (DE)
(74) Vertreter: Finger, Karsten

(56) Entgegenhaltungen:
- US-B1- 6 415 834
- PATENT ABSTRACTS OF JAPAN Bd. 1998, Nr. 14, 31. Dezember 1998 (1998-12-31) -& JP 10 250318 A (BRIDGESTONE CORP), 22. September 1998 (1998-09-22)
- PATENT ABSTRACTS OF JAPAN Bd. 014, Nr. 491 (M-1040), 25. Oktober 1990 (1990-10-25) & JP 02 200503 A (YOKOHAMA RUBBER CO LTD:THE), 8. August 1990 (1990-08-08)
- PATENT ABSTRACTS OF JAPAN Bd. 2000, Nr. 12, 3. Januar 2001 (2001-01-03) & JP 2000 264023 A (TOYO TIRE & RUBBER CO LTD), 26. September 2000 (2000-09-26)
- PATENT ABSTRACTS OF JAPAN Bd. 1998, Nr. 02, 30. Januar 1998 (1998-01-30) & JP 09 272312 A (YOKOHAMA RUBBER CO LTD:THE), 21. Oktober 1997 (1997-10-21)

## Beschreibung

Die Erfindung betrifft einen Fahrzeugluftreifen mit jeweils zwischen wenigstens zwei Profilrillen erhabenen Profilelementen, wobei wenigstens in einem Profilelement ein Feineinschnitt ausgebildet ist, der sich durch das Profilelement von einer Profilrille zur anderen Profilrille hindurch erstreckt.

Üblicherweise ist die Dicke der Feineinschnitte längs ihrer Erstreckung konstant gewählt. Dies führt zu einer Wirksamkeit des Öffnen und Schließens der Feineinschnitte rein abhängig von Dicke des Feineinschnitts, der Blocksteifigkeit und des befahrenen Untergrunds. Merkliche Schereffekte zur Erhöhung der Traktion auf matschigem oder schneebedecktem Untergrund treten somit weitgehend vollständig, wenn die Bedingungen gegeben sind, oder sie öffnen gar nicht, wenn die Bedingungen nicht gegeben sind. Im Grenzbereich zwischen diesen Bedingungen ist somit ein Wechsel zwischen unerwünscht Starkem und einem unerwünscht fehlenden Schereffekt möglich.

Es sind auch beispielsweise aus der gattungsgemäßen EP1170153A1 derartige Feineinschnitte bekannt, die an Übergängen zu den begrenzenden Profilrillen gleich schmal und im Mittenbereich des Profilblocks mit etwas gößerer Dicke ausgebildet sind. Bei diesen Ausbildungen kann Matsch oder Schnee möglicherweise in manchen Situationen besser in den Feineinschnitt eindringen. Dennoch ist auch bei dieser Ausbildung ein wirksames Öffnen und Schließen nur möglich, wenn die auf beiden Seiten dünn ausgebildeten Bereiche des Feineinschnitts geöffnet oder geschlossen werden können. Auch hier ist somit ein sprunghafter Wechsel zwischen Wirksamkeit der Scherwirkung und Nichtwirksamkeit möglich.

Der Erfindung liegt die Aufgabe zugrunde, einen Fahrzeugluftreifen mit jeweils zwischen wenigstens zwei Profilrillen erhabenen Profilelementen, wobei wenigstens in einem Profilelement ein Feineinschnitt ausgebildet ist, der sich durch das Profilelement von einer Profilrille zur anderen Profilrille hindurch erstreckt, zu schaffen, bei dem ein gleichmäßigeres Einsetzen und/oder Aufgeben der Scherwirkung von Feineinschnitten ermöglicht wird.

Erfindungsgemäß wird die Aufgabe durch die Ausbildung gemäß den Merkmalen von Anspruch 1, bei der der Feineinschnitt längs seiner gesamten Erstreckung ausgehend von der einen Profilrille bis zur anderen Profilrille mit zunehmender Dicke ausgebildet ist., gelöst. Bereits geringe Mengen Schnee oder Matsch sind in der Lage von der Seite des Feineinschnitts mit der größten Dicke her einzudringen und den Feineinschnitt von dieser Seite her zu öffnen, wobei die Länge der Öffnung des Feineinschnitts mit zunehmeder Menge an Schnee oder Matsch der Feineinschnitt zunimmt. Auf diese Weise kann auch die durch den Feineinschnitt erzilte Scherwirkung feiner und übergangsloser dosiert in Abhängigkeit vom jeweiligen Untergrund eingestellt werden.

Bevorzugt ist die Ausbildung gemäß den Merkmalen von Anspruch 2, bei der sich die beiden Profilrillen in Umfangsrichtung des Fahrzeugluftreifens erstrecken.

Bevorzugt ist die Ausbildung gemäß den Merkmalen von Anspruch 3, bei der das erhabene Profilelement ein Profilblockelement einer über den Umfang des Fahrzeugluftreifens erstreckten Profilblockreihe aus einer Vielzahl von in Umfangsrichtung hintereinander angeordneten Profilblockelementen ist.

Bevorzugt ist die Ausbildung gemäß den Merkmalen von Anspruch 4, bei der die Profilblockreihe eine Schulterprofilblockreihe ist. Dies ermöglicht eine Verbesserung des Geräuschkomforts, des Fahrkomforts auf trockenen und nassen Fahrbahnen sowie eine Verbesserung des Abriebbildes.

Besonders vorteilhaft ist die Ausbildung gemäß den Merkmalen von Anspruch 5, bei der der Feineinschnitt ausgehend von der die Schulterprofilblockreihe nach axial außen begrenzenden Profilrille über seine gesamte Erstreckung bis zur die Schulterprofilblockreihe nach axial innen zur Äquatorebene hin begrenzenden Profilrille mit zunehmender Dicke ausgebildet ist. Die geringe Dicke an der Schulteraußenseite in Verbindung mit der zunehmenden Dicke zur Äquatorebene hin ermöglicht eine Verbindung guter Handlingeigenschaften auf trockenem und nassem Untergrund durch die dünne Ausbildung in dem für diese Handlingeigenschaften wichtigen Außenbereich mit verbesserter Traktionswirkung auf Schnee oder Matsch fein abgestimmt auf den jeweiligen befahrenen Untergrund und dessen Untergrundbedingungen. Geräuschkomfort, Fahrkomfort auf trockenen und nassen Fahrbahnen sowie das Abriebbild können hierdurch auch weiter verbessert werden. Darüber hinaus kann eine verbesserte Scherwirkung auf Schnee ermöglicht werden.

Besonders vorteilhaft ist hierzu die Ausbildung gemäß den Merkmalen von Anspruch 6, wobei die die Schulterprofilblockreihe zur Äquatorebene hin begrenzende Umfangsrille zur Äquatorrichtung hin eine weitere Profilblockreihe mit in Umfangsrichtung hintereinander angeordneten Profilblockelementen begrenzt, wobei diese Profilblockelemente zumindest teilweise ebenfalls mit Feineinschnitten versehen sind, die sich zwischen zwei angrenzenden Profilrillen erstrecken, wobei diese Feineinschnitte an den beiden Profilrillen insbesondere jeweils eine gleiche Dicke aufweisen. Die geringe Dicke an der Schulteraußenseite in Verbindung mit der zunehmenden Dicke zur Äquatorebene hin ermöglicht eine Verbindung guter Handlingeigenschaften auf trockenem Untergrund durch die dünne Ausbildung in dem für diese Handlingeigenschaften wichtigen Außenbereich mit verbesserter Traktionswirkung auf Schnee oder Matsch fein abgestimmt auf die jeweiligen befahrenen Untergrunds und dessen Untergrundbedingungen.

Besonders vorteilhaft ist die Ausbildung gemäß den Merkmalen von Anspruch 7, wobei der Feineinschnitt ausgehend von der einen Profilrille über seine gesamte Erstreckung bis zur anderen Profilrille mit stetig zunehmender Dicke ausgebildet ist. Hierdurch wird eine sehr gleichmäßige ohne Sprünge Zu- bzw. Abnahme der Scherwirkung mit Veränderung des befahrenen Untergrunds in Abhängigkeit von dessen Bedingungen erzielt.

Bevorzugt ist die Ausbildung gemäß den Merkmalen von Anspruch 8, wobei der Feineinschnitt ausgehend von der einen Profilrille über seine gesamte Erstreckung bis zur anderen Profilrille mit kontinuierlich zunehmender Dicke ausgebildet ist. Hierdurch wird eine besonders gleichmäßige Zu- bzw. Abnahme der Scherwirkung mit Veränderung des befahrenen Untergrunds in Abhängigkeit von dessen Bedingungen erzielt.

Die Erfindung wird im Folgenden an Hand der in den Figuren 1- 6 dargestellten Ausführungsbeispiele näher erläutert. Darin zeigen
- Fig.1: Ausschnitt eines Reifenprofils in Draufsicht mit erfindungsgemäßen Feineinschnitten in den Schulterblockreihen,
- Fig.2: vergrößerte Auschnittsdarstellung von Fig. 1,
- Fig.3: Ausbildung der Feineinschnitte in einer zweiten Ausführungsform,
- Fig.4: Ausbildung der Feineinschnitte in einer dritten Ausführungsform,
- Fig.5: Ausbildung der Feineinschnitte in einer vierten Ausführungsform,
- Fig.6: Ausbildung der Feineinschnitte in einer vierten Ausführungsform.

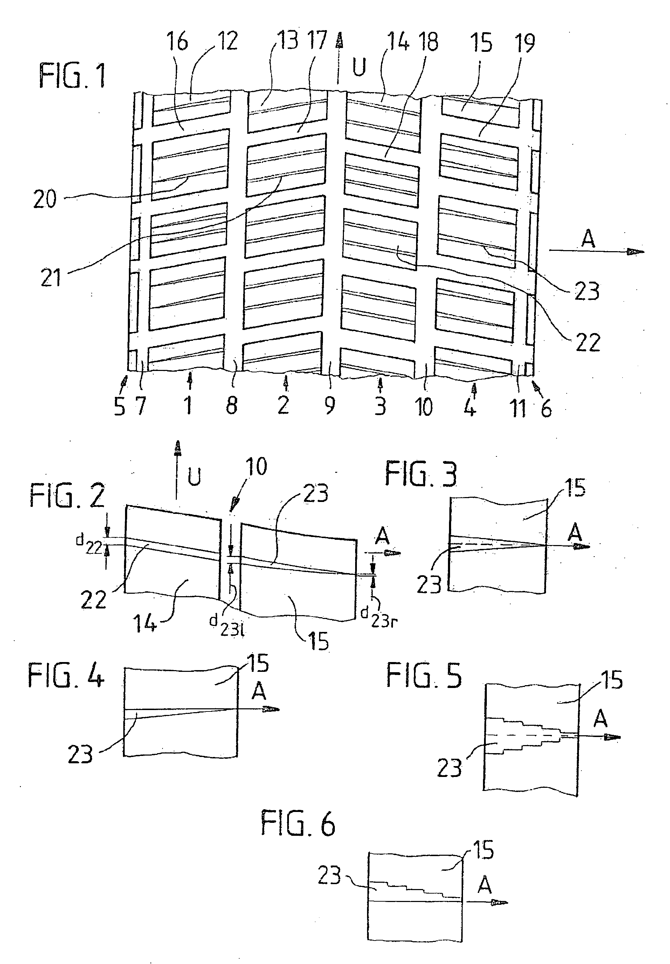

Fig. 1 zeigt einen Ausschnitt eines Laufflächenprofils eines Fahrzeugluftreifens in Draufsicht mit in Umfangsrichtung U (Pfeildarstellung) des Fahrzeugluftreifens ausgerichteten und über den gesamten Umfang des Fahrzeugluftreifens erstreckten, in Achsrichtung A (Pfeildarstellung) des Fahrzeugluftreifens parallel nebeneinander angeordneten Profilblockreihen 1, 2, 3 und 4, von denen die Profilblockreihen 1 und 4 Schulterprofilblockreihen sind. Die Schulterprofilblockreihe 1 ist aus einer Vielzahl von in Umfangsrichtung U hintereinander und jeweils durch eine Querrille 16 voneinander getrennten Profilblockelementen 12 ausgebildet. Die Profilblockreihe 2 ist aus einer Vielzahl von in Umfangsrichtung U hintereinander und jeweils durch eine Querrille 17 voneinander getrennten Profilblockelementen 13 ausgebildet. Die Profilblockreihe 3 ist aus einer Vielzahl von in Umfangsrichtung U hintereinander angeordneten und jeweils durch eine Querrille 18 voneinander getrennten Profilblockelementen 14 ausgebildet. Die Schulterprofilblockreihe 4 ist aus einer Vielzahl von in Umfangsrichtung hintereinander und jeweils durch eine Querrille 19 voneinander getrennten Profilblockelementen 15 ausgebildet. Die Profilblockelemente 12 der Schulterrrofilblockreihe 1 sind von den Profilblockelementen 13 der Profilblockreihe 2 durch eine in Umfangsrichtung U des Fahrzeugluftreifens ausgerichtete und über den gesamten Umfang des Fahrzeugluftreifens erstreckte Umfangsrille 8 axial voneinander getrennt. Die Profilblockelemente 13 der Profilblockreihe 2 sind von den Profilblockelementen 14 der Profilblockreihe 3 durch eine in Umfangsrichtung des Fahrzeugluftreifens ausgerichtete und über den gesamten Umfang des Fahrzeugluftreifens erstreckte Umfangsrille 17 axial voneinander getrennt. Die Profilblockelemente 14 der Profilblockreihe 3 sind von den Profilblockelementen 15 der Schulterprofilblockreihe 4 durch eine in Umfangsrichtung U des Fahrzeugluftreifens über den gesamten Umfang des Fahrzeugluftreifens erstreckte Umfangsrille 10 axial voneinander getrennt. Die Profilblockelemente 12 der Schulterprofilblockelementreihe sind von den Dekorelementen einer linken Dekorelementreihe 5 durch eine in Umfangsrichtung U des Fahrzeugluftreifens erstreckte und über den gesamten Umfang des Fahrzeugluftreifens ausgerichtete Umfangsrille 7 axial voneinander getrennt. Die Profilblockelemente 15 der Schulterprofilblockelementreihe 4 sind von den Dekorelementen einer rechten Dekorelementreihe 6 durch eine in Umfangsrichtung U des Fahrzeugluftreifens ausgerichtete und über den gesamten Umfang des Fahrzeugluftreifens erstreckte Umfangsrille 11 axial voneinander getrennt.

Die Profilblockelemente 13 sind an ihrer radialen Außenseite mit einem oder mehreren parallel zu den Querrillen 17 ausgerichteten und über die gesamte axiale Erstreckung des Profilblockelements 13 erstreckten Feineinschnitten 21 ausgebildet. Die Feineinschnitte 21 erstrecken sich von der Umfangsrille bis zur Umfangsrille 9. Die Profilblockelemente 14 der Profilblockreihe 3 sind an ihrer radialen Außenseite mit einem oder mehreren parallel zu den Querrillen 18 ausgerichteten und über den gesamten axialen Erstreckungsbereich der Profilblockelemente 14 erstreckten Feineinschnitten 22 ausgebildet. Die Feineinschnitte 22 erstrecken sich von der Umfangsrille 9 bis zur Umfangsrille 10. Die Profilblockelemente 12 der Schulterprofilblockreihe 1 sind an ihrer radialen Außenseite mit einem oder mehreren parallel zu den Querrillen 16 ausgerichteten und über den gesamten axialen Erstreckungsbereich der Profilblockelemente 12 erstreckten Feineinschnitten 20 ausgebildet. Die Feineinschnitte 20 erstrecken sich von der Umfangsrille 7 bis zur Umfangsrille 8. Die Profilblockelemente 15 der Schulterprofilblockreihe 4 sind an ihrer radialen Außenseite mit einem oder mehreren parallel zu den Querrillen 19 ausgerichteten und über den gesamten axialen Erstreckungsbereich der Profilblockelemente 15 erstreckten Feineinschnitten 23 ausgebildet. Die Feineinschnitte 23 erstrecken sich von der Umfangsrille 10 bis zur Umfangsrille 11.

Die Feineinschnitte 21 und 22 sind längs ihrer radialen Erstreckung im Fahrzeugluftreifen jeweils in jeder radialen Position über ihren gesamten axialen Verlauf mit einer konstanten Dicke ausgebildet. Die Dicke stellt dabei in jeder radialen Position jeweils den Abstand zwischen den Feineinschnittsflanken dar. So ist beispielsweise in der radial äußeren Oberfläche des Profilblockelements 14, die in den Fig. 1 und Fig.2 zu erkennen ist, die Dicke d₂₂ des Profilblockelements 14 in der radial äußeren Oberfläche des Profilblockelements 14 bei dem unter Normdruck stehenden unbelasteten Fahrzeugluftreifen über die gesamte axiale Erstreckung des Profilblockelements 14 - wie in Fig. 2 dargestellt ist - konstant.

Die Feineinschnitte 20 und 23 der Profilblockelemente 12 und 15 der Schulterprofilblockreihen 1 und 4 sind längs ihrer radialen Erstreckung im Fahrzeugluftreifen jeweils in jeder radialen Position längs ihrer axialen Erstreckung ausgehend von der zur Schulterseite hin begrenzenden Profilrille 7 bzw. 11 zu der zum Reifenäquator hin begrenzenden Profilrille 8 bzw. 10 eine zunehmende Dicke des Feineinschnitts auf. Wie in Fig. 2 am Beispiel der radial äußeren Oberfläche eines Profilblockelements 15 der Schulterprofilblockreihe 4 dargestellt ist, nimmt die Feineinschnittsdicke von ihrem Mininmalwert in dieser radialen Position der radial äußeren Oberfläche, der an der zur Profilrille 11 hinweisenden rechten Seite mit d₂₃ᵣ eingezeichnet ist, bis zu der von der Umfangsrille 10 begrenzten linken Seite mit einer maximalen Feineinschnittsdicke d₂₃₁ über die gesamte axiale Erstreckung des Profilblockelements 15 kontinuierlich zu.

Während in den in den Fig. 1 und Fig. 2 dargestellten Ausführungsbeispielen die Feineinschnittsverläufe der Profilblockelemente 12 bzw. 15 entsprechend den dargestellten Querrillenverläufen 16 bzw. 19 parallel zu diesen gekrümmt verlaufend dargestellt sind, ist in Fig. 3 anhand des Beispiels des Feineinschnitts 23 eines Profilblockelements 15 ein Ausführungsbeispiel mit geradlinigem Erstreckungsverlaufs des Feineinschnitts 23 dargestellt. Dieser kann dabei, wie in Fig. 3 dargestellt ist, einen symmetrisch zur Achsrichtung des Fahrzeugluftreifens ausgebildeten V-förmigen Öffnungsverlauf aufweisen, oder wie in einem in Fig. 4 dargestellten Ausführungsbeispiel einen unsymmetrisch zur Achsrichtung des Fahrzeugluftreifens ausgebildeten V-förmigen Verlauf aufweisen.

In einzelnen Fällen beispielsweise zur Verbesserung des Kraftschlusses auf Eis kann es sinnvoll sein - wie im Ausführungsbeispiel von Fig. 6 dargestellt ist - eine Einschnittsflanke oder wie im Ausführungsbeispiel von Fig. 5 dargestellt ist - beide Einschnittsflanken des Feineinschnitts 23 in ihrem axialen Verlauf stufenförmig auszubilden.

Die Feineinschnitte 21, 22, 23 weisen eine maximale Dicke von 0,1mm bis 1,0mm auf.

### Bezugszeichenliste

### (Teil der Beschreibung)

- 1: Schulterprofilblockreihe
- 2: Profilblockreihe
- 3: Profilblockreihe
- 4: Schulterprofilblockreihe
- 5: Dekorelementreihe
- 6: Dekorelementreihe
- 7: Umfangsrille
- 8: Umfangsrille
- 9: Umfangsrille
- 10: Umfangsrille
- 11: Umfangsrille
- 12: Profilblockelement
- 13: Profilblockelement
- 14: Profilblockelement
- 15: Profilblockelement
- 16: Querrille
- 17: Querrille
- 18: Querrille
- 19: Querrille
- 20: Feineinschnitt
- 21: Feineinschnitt
- 22: Feineinschnitt
- 23: Feineinschnitt

## Patentansprüche

1. Fahrzeugluftreifen mit jeweils zwischen wenigstens zwei Profilrillen (8,9,10) erhabenen Profilelementen (12,13,14,15), wobei wenigstens in einem Profilelement (12,15) ein Feineinschnitt (20,23) ausgebildet ist, der sich durch das Profilelement (12,15) von einer Profilrille (7,11) zur anderen Profilrille (8,10) hindurch erstreckt,
**dadurch gekennzeichnet,**
**dass** der Feineinschnitt (20,23) längs seiner gesamten Erstreckung ausgehend von der einen Profilrille (7,11) bis zur anderen Profilrille (8,10) mit zunehmender Dicke ausgebildet ist.

2. Fahrzeugluftreifen gemäß den Merkmalen von Anspruch 1,
wobei sich die beiden Profilrillen (7,8,11,10) in Umfangsrichtung des Fahrzeugluftreifens erstrecken.

3. Fahrzeugluftreifen gemäß den Merkmalen von Anspruch 1 oder 2,
wobei das erhabene Profilelement (12,15) ein Profilblockelement einer über den Umfang des Fahrzeugluftreifens erstreckten Profilblockreihe (1,4) aus einer Vielzahl von in Umfangsrichtung hintereinander angeordneten Profilblockelementen ist.

4. Fahrzeugluftreifen gemäß den Merkmalen von Anspruch 3,
wobei die Profilblockreihe (1,4) eine Schulterprofilblockreihe ist.

5. Fahrzeugluftreifen gemäß den Merkmalen von Anspruch 4,
dass der Feineinschnitt ausgehend von der die Schulterprofilblockreihe (1,4) nach axial außen begrenzenden Profilrille (7,11) über seine gesamte Erstreckung bis zur die Schulterprofilblockreihe (1,4) nach axial innen zur Äquatorebene hin begrenzenden Profilrille (8,10) mit zunehmender Dicke ausgebildet ist.

6. Fahrzeugluftreifen gemäß den Merkmalen von Anspruch 4 oder 5,
wobei die die Schulterprofilblockreihe (1,4) zur Äquatorebene hin begrenzende Umfangsrille (8,10) zur Äquatorrichtung hin eine weitere Profilblockreihe (2,3) mit in Umfangsrichtung hintereinander angeordneten Profilblockelementen (13,14) begrenzt, wobei diese Profilblockelemente (13,14) zumindest teilweise ebenfalls mit Feineinschnitten (21,22) versehen sind, die sich zwischen zwei angrenzenden Profilrillen (8,9,10) erstrecken, wobei diese Feineinschnitte (21,22) an den beiden Profilrillen (8,9,10) insbesondere jeweils eine gleiche Dicke aufweisen.

7. Fahrzeugluftreifen gemäß den Merkmalen von einem oder mehreren der vorangegangenen Ansprüche,
wobei der Feineinschnitt (20,23) ausgehend von der einen Profilrille (7,11) über seine gesamte Erstreckung bis zur anderen Profilrille (8,10) mit stetig zunehmender Dicke ausgebildet ist.

8. Fahrzeugluftreifen gemäß den Merkmalen von einem oder mehreren der vorangegangenen Ansprüche,
wobei der Feineinschnitt (20,23) ausgehend von der einen Profilrille (7,11) über seine gesamte Erstreckung bis zur anderen Profilrille (8,10) mit kontinuierlich zunehmender Dicke ausgebildet ist.

## Claims

1. Pneumatic vehicle tyre with profile elements (12, 13, 14, 15), which are raised in each case between at least two profile grooves (8, 9, 10), a sipe (20, 23) which extends through the profile element (12, 15) from one profile groove (7, 11) to the other profile groove (8, 10) being formed at least in one profile element (12, 15), **characterized in that** the sipe (20, 23) is formed with increasing thickness along its overall extent, from the one profile groove (7, 11) to the other profile groove (8, 10).

2. Pneumatic vehicle tyre according to the features of Claim 1, the two profile grooves (7, 8, 11, 10) extending in the circumferential direction of the pneumatic vehicle tyre.

3. Pneumatic vehicle tyre according to the features of Claim 1 or 2, the raised profile element (12, 15) being a profile block element of a row of profile blocks (1, 4) that is made to extend over the circumference of the pneumatic vehicle tyre and comprises a multiplicity of profile block elements arranged one behind the other in the circumferential direction.

4. Pneumatic vehicle tyre according to the features of Claim 3, the row of profile blocks (1, 4) being a row of shoulder profile blocks.

5. Pneumatic vehicle tyre according to the features of Claim 4, **characterized in that** the sipe is formed with increasing thickness over its overall extent, from the profile groove (7, 11) that delimits the row of shoulder profile blocks (1, 4) axially outwards to the profile groove (8, 10) that delimits the row of shoulder profile blocks (1, 4) axially inwards towards the equatorial plane.

6. Pneumatic vehicle tyre according to the features of Claim 4 or 5, the circumferential grooves (8, 10) that delimit the row of shoulder profile blocks (1, 4) towards the equatorial plane delimiting in the equatorial direction a further row of profile blocks (2, 3) with profile block elements (13, 14) arranged one behind the other in the circumferential direction, these profile block elements (13, 14) likewise being at least partially provided with sipes (21, 22), which extend between two adjacent profile grooves (8, 9, 10), these sipes (21, 22) particularly having an identical thickness respectively at the two profile grooves (8, 9, 10).

7. Pneumatic vehicle tyre according to the features of one or more of the preceding claims, the sipe (20, 23) being formed with steadily increasing thickness over its overall extent, from the one profile groove (7, 11) to the other profile groove (8, 10).

8. Pneumatic vehicle tyre according to the features of one or more of the preceding claims, the sipe (20, 23) being formed with continuously increasing thickness over its overall extent, from the one profile groove (7, 11) to the other profile groove (8, 10).

## Revendications

1. Bandage pneumatique pour roue de véhicule, qui présente
des éléments profilés (12, 13, 14, 15) en relief disposés entre au moins deux rainures profilées (8, 9, 10),
une fine entaille (20, 23) qui s'étend dans l'élément profilé (12, 15) depuis une rainure profilée (7, 11) jusque l'autre rainure profilée (8, 10) étant formée dans au moins un élément profilé (12, 15), **caractérisé en ce que**
l'épaisseur de la fine entaille (20, 23) augmente sur toute son extension entre une rainure profilée (7, 11) et l'autre rainure profilée (8, 10).

2. Bandage pneumatique pour roue de véhicule selon les caractéristiques de la revendication 1, dans lequel les deux rainures profilées (7, 8, 11, 10) s'étendent dans la direction périphérique du bandage pneumatique pour roue de véhicule.

3. Bandage pneumatique pour roue de véhicule selon les caractéristiques des revendications 1 ou 2, dans lequel l'élément profilé (12, 15) en relief est un élément de bloc profilé d'une rangée (1, 4) de blocs profilés qui s'étend à la périphérie du bandage pneumatique pour roue de véhicule et qui est constituée de plusieurs éléments de bloc profilé disposés les uns à la suite de autres dans la direction périphérique.

4. Bandage pneumatique pour roue de véhicule selon les caractéristiques de la revendication 3, dans lequel la rangée (1, 4) de blocs profilés est une rangée de blocs profilés d'épaulement.

5. Bandage pneumatique pour roue de véhicule selon les caractéristiques de la revendication 4, **caractérisé en ce que** l'épaisseur de la fine entaille augmente sur toute son extension entre la rangée (1, 4) de blocs profilés d'épaulement vers la rainure profilée (7, 11) qui la délimite axialement vers l'extérieur et jusqu'à la rainure profilée (8, 10) qui délimite la rangée (1, 4) de blocs profilés d'épaulement axialement vers l'intérieur dans la direction du plan équatorial.

6. Bandage pneumatique pour roue de véhicule selon les caractéristiques des revendications 4 ou 5, dans lequel la rainure profilée (8, 10) qui délimite la rangée (1, 4) de blocs profilés d'épaulement du côté du plan équatorial délimite dans la direction équatoriale une autre rangée (2, 3) de blocs profilés qui présente des éléments (13, 14) de bloc profilé disposés à la suite les uns des autres dans la direction périphérique, au moins certains de ces éléments (13, 14) de bloc profilé étant également dotés de fines entailles (21, 22) qui s'étendent entre deux rainures profilées (8, 9, 10) adjacentes, ces fines entailles (21, 22) présentant en particulier chacune la même épaisseur sur les deux rainures profilées (8, 9, 10).

7. Bandage pneumatique pour roue de véhicule selon les caractéristiques d'une ou plusieurs des revendications précédentes, dans lequel l'épaisseur de la fine entaille (20, 23) augmente de manière constante sur toute son extension entre une rainure profilée (7, 11) et l'autre rainure profilée (8, 10).

8. Bandage pneumatique pour roue de véhicule selon les caractéristiques d'une ou plusieurs des revendications précédentes, dans lequel l'épaisseur de la fine entaille (20, 23) augmente de manière continue sur toute son extension entre une rainure profilée (7, 11) et l'autre rainure profilée (8, 10).
